# EUROPÄISCHE PATENTANMELDUNG

(11) **EP 1 203 690 A2**
(43) Veröffentlichungstag der Anmeldung: **08.05.2002**
(21) Anmeldenummer: 01124077.7
(22) Anmeldetag: 10.10.2001
(51) Int. Cl.: B60N 2/56

(54) **Kraftwagensitz mit Luftversorgungseinrichtung**

(30) Priorität: 01.11.2000 DE 10054008
(71) Anmelder: DaimlerChrysler AG, 70567 Stuttgart (DE)
(72) Erfinder: Bargheer, Claudio, 70435 Stuttgart (DE); Nordberg, Peter, 8010 Graz (AT); Orizaris, Vasilios, 71272 Renningen (DE); Pfahler, Karl, Dr., 70180 Stuttgart (DE); Renner, Lothar, 71154 Nufringen (DE)

(57) **Zusammenfassung**

Die Erfindung betrifft einen Kraftwagensitz für einen offenen Kraftwagen mit einem Sitzteil und einer mit zugehöriger Kopfstütze versehenen Rückenlehne, in deren oberen Bereich zur Verminderung unerwünschter Zuglufterscheinungen für den Sitzinsassen wenigstens eine Luftausströmöffnung einer Luftversorgungseinrichtung angeordnet ist.

Wenigstens eine weitere Luftausströmöffnung der Luftversorgungseinrichtung ist als Sitzbelüftung und/oder als Sitzheizung in der dem Sitzinsassen zugewandten Sitzoberfläche vorgesehen.

## Beschreibung

Die Erfindung betrifft einen Kraftwagensitz nach dem Oberbegriff des Patentanspruchs 1.

Ein solcher, der DE 196 54 370 C1 als bekannt zu entnehmender Kraftwagensitz für einen offenen Kraftwagen umfaßt ein Sitzteil und eine mit zugehöriger Kopfstütze versehene Rückenlehne. Im oberen Bereich der Rückenlehne sind zur Verminderung unerwünschter Zuglufterscheinungen Luftdüsen einer Luftversorgungseinrichtung zum Umströmen des Kopf-, Schulter und Nackenbereichs des Sitzinsassen angeordnet.

Der Erfindung liegt die Aufgabe zugrunde, einen Kraftwagensitz der eingangs genannten Art zu schaffen, dessen Luftversorgungseinrichtung universeller einsetzbar ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagensitz nach der Erfindung dient die Luftversorgungseinrichtung nicht nur der Verminderung von unerwünschten Zuglufterscheinungen, sondern darüber hinaus auch der Sitzbelüftung und/oder der Sitzbeheizung. Hierzu ist in der dem Sitzinsassen zugewandten Oberfläche der Rückenlehne und/oder des Sitzkissenteil mindestens eine weitere Luftausströmöffnung der Luftversorgungseinrichtung vorgesehen. Demgemäß kann auf eine separate Sitzheizung, beispielsweise eine unter dem Sitzbezug angeordnete separate Heizmatte sowie auf eine separate Sitzbelüftung, beispielsweise durch unterhalb des Sitzbezugs angeordneten Gebläsen verzichtet werden. Vielmehr ist erfindungsgemäß eine Luftverteileinrichtung für alle Funktionen - jeweils separat oder gemeinsam - lediglich eine Luftversorgungseinrichtung vorgesehen. Diese Zusammenfassung mehrerer durch die Luftversorgungseinrichtung zu übernehmenden Funktionen ermöglicht eine Vereinfachung sowohl des Bau- als auch des Montageaufwands des Kraftwagensitzes. Außerdem kann auch der Aufwand zur Steuerung der beschriebenen Funktionen, die hier in der Luftversorgungseinrichtung vereinigt sind, bedeutend verringert werden.

Dabei kann die Luftversorgungseinrichtung - mit Ausnahme der Luftausströmöffnungen - für den Fahrgast unsichtbar und ggf. zusammen mit dem Gebläse und dem Heizelement im Sitz integriert sein. In diesem Fall der Integration des Gebläses und des Heizelements innerhalb des Sitzes kann Warmluft besonders schnell an den verschiedenen Luftausströmöffnungen bereitgestellt werden.

Gleichfalls wäre es auch denkbar, die Luftversorgungseinrichtung ggf. ohne separates Gebläse und/oder Heizelement mit Luft aus der Heizungs- oder Klimaanlage des Kraftwagens zu speisen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig.1 - 3: jeweils schematisch eine perspektivische Vorderansicht, eine perspektivische Rückansicht und eine Seitenansicht auf die Rückenlehne mit der Luftversorgungseinrichtung des erfindungsgemäßen Kraftwagensitzes nach einer ersten Ausführungsform der Erfindung;
- Fig.4: eine schematische Perspektivansicht auf die zu einer vormontierbaren Baueinheit zusammengefaßte rückseitige Lehnenverkleidung und eine Kanalanordnung der Luftversorgungseinrichtung des Kraftwagensitzes;
- Fig.5 und 6: jeweils schematisch eine perspektivische Vorderansicht und eine Seitenansicht auf die Rückenlehne und das Sitzkissenteil mit der Luftversorgungseinrichtung des erfindungsgemäßen Kraftwagensitzes nach einer weiteren Ausführungsform der Erfindung;
- Fig.7: eine schematische, perspektivische Rückansicht auf den oberen Bereich der Rückenlehne gemäß Fig.5 und auf eine Luftdüse der Kanalanordnung, die mit der Höhenverstellung der Kopfstütze bewegungsgekoppelt ist; sowie in
- Fig.8: eine vergrößerte schematische Darstellung der Kanalanordnung im Bereich des Details VIII in Fig.5, wobei eine Verteileinrichtung für einen ersten Kanal sowie für zwei von diesem abgezweigten und quer zu diesem verlaufenden weiteren Kanälen dargestellt ist.

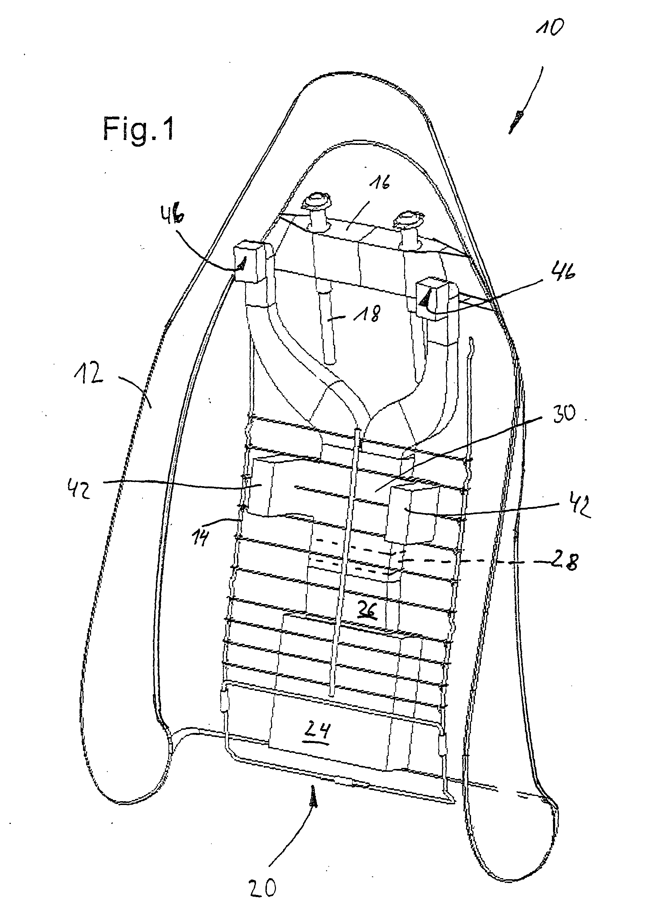

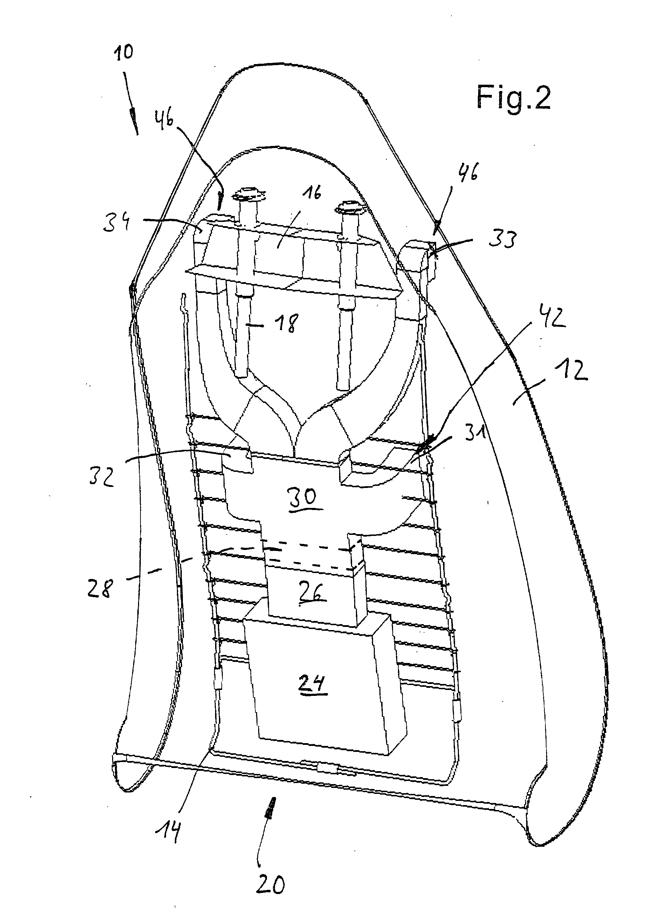

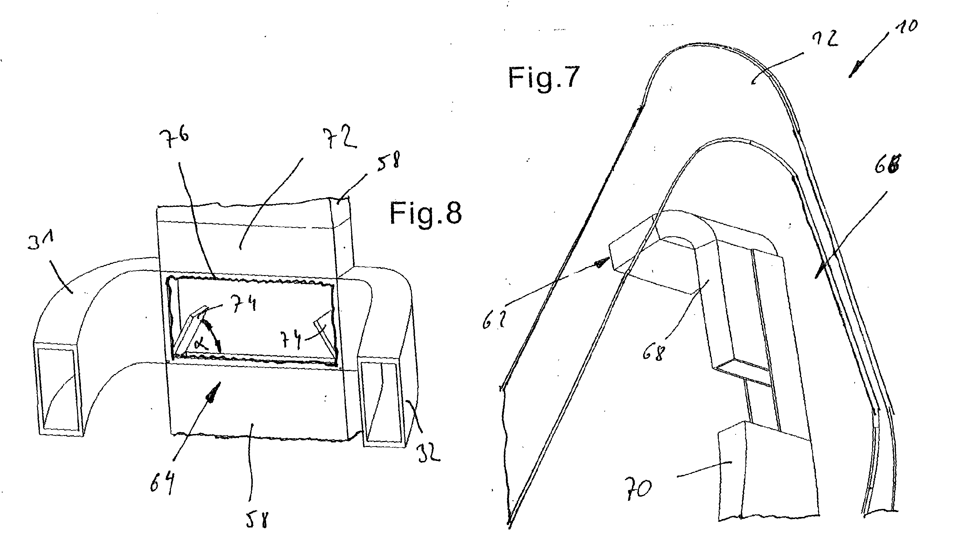

In den Figuren 1 bis 3 ist jeweils schematisch eine perspektivische Vorderansicht, eine perspektivische Rückansicht und eine Seitenansicht auf die Rückenlehne 10 eines Kraftwagensitzes für einen offenen Kraftwagen gezeigt. Von der Rückenlehne 10 sind hier ein Lehnenrahmen 12, eine federnd nachgiebige Stützeinrichtung 14 eines Sitzpolsters sowie eine mit dem Lehnenrahmen 12 fest verbundene Führungseinrichtung 16 für Führungsstangen 18 einer hier ebenfalls nicht dargestellten, höhenverstellbaren Kopfstütze erkennbar. In die Rückenlehne 10 ist eine Luftversorgungseinrichtung 20 integriert, welche eine Kanalanordnung 22 umfaßt. Der Kanalanordnung 22 ist hier ein von einem Gehäuse aufgenommenes Gebläse 24 vorgeschaltet, dessen Luftansaugung beispielsweise an der Unterseite der Rückenlehne 10 erfolgt. Druckseitig des Gebläses 24 gelangt der Luftstrom über einen Kanalabschnitt 26 zu einem gestrichelt angedeuteten, zuschaltbaren Heizelement 28, mit dem der Luftstrom auf Wunsch des Sitzinsassen temperiert werden kann. Dem Heizelement 28 ist eine Verteileinrichtung 30 nachgeschaltet, mit welcher der Luftstrom - je nach Einstellung des Fahrgastes - an ein unteres Teilkanalpaar 31,32 und ein oberes Teilkanalpaar 33,34 verteilt werden kann. Zur Einstellung der Teilluftströme sind in den Teilkanälen 31-34 beispielsweise Absperrorgane und/oder Leiteinrichtungen vorgesehen, wie sie im weiteren unter Bezugnahme auf Fig.8 noch näher erläutert werden. In diesem Zusammenhang wäre es natürlich auch denkbar, in jedem Teilkanal 31-34 ein separates Heizelement 28 oder zusätzlich ein Kühlelement anzuordnen. Das untere Teilkanalpaar 31,32 ist etwa auf halber Höhe der Rückenlehne 10 angeordnet und in Draufsicht im wesentlichen U-förmig ausgebildet.

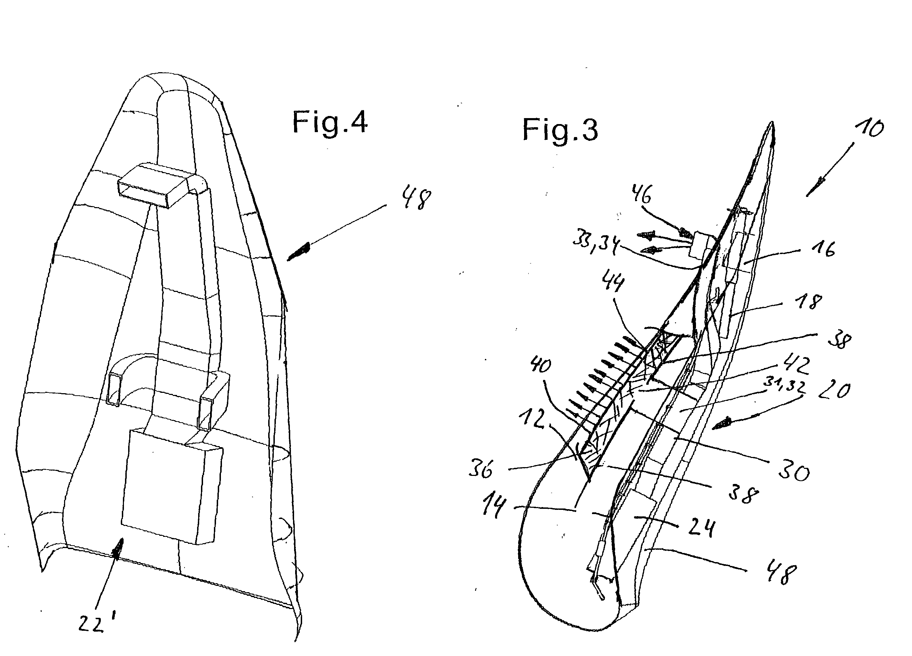

Aus Fig.3 wird ersichtlich, dass die beiden Teilkanäle 31,32 in einem auf der Stützeinrichtung 14 aufliegenden Abstandsgewirke 36 münden. Das Abstandsgewirke 36 ist auf seiner der Kanalanordnung 22 zugewandten Rückseite von einer luftdichten Schicht 38 und auf dessen Vorderseite von einem Sitzbezug 40 überdeckt, wobei in der rückseitigen Schicht 38 Einströmöffnungen 42 vorgesehen sind, über welche die Teilluftströme der Teilkanäle 31,32 in das Abstandsgewirke 36 überströmen können. In dem Abstandsgewirke 36 wird die über die Teilkanäle 31,32 eingeströmte Luft an eine Vielzahl von Luftausströmöffnungen 44 in dem hierzu perforierten Sitzbezug 40 aus Leder bzw. in der Sitzoberfläche verteilt. Die durch die Luftausströmöffnungen 44 in der dem Sitzinsassen zugewandten Sitzoberfläche ausströmende Luft dient dann - je nachdem ob sie erwärmt ist oder nicht - zur Sitzbelüftung und/oder zur Sitzbeheizung. Anstelle des hier verwendeten Sitzbezuges 40 aus perforiertem Leder wäre auch ein Stoffbezug denkbar. Insbesondere zur Sitzbelüftung wird die Luft in dem Abstandsgewirke 36 vorzugsweise entlang der Unterseite des Sitzbezugs 40 geleitet, so dass ein direktes Ausströmen der Luft gegen den Rücken des Sitzinsassen vermieden werden kann. Vielmehr soll die entlang der Unterseite des Sitzbezugs 40 geleitete und aus den Luftausströmöffnungen 44 austretende Luft tangential entlang des Rückens des Sitzinsassen geführt werden, um Feuchtigkeit vom Rücken des Sitzinsassen aufzunehmen und diese anschließend über das Abstandsgewirke 36 abzuführen.

Das oberes Teilkanalpaar 33,34 endet in seiner Höhenerstreckung im Bereich des Kopf-, Schulter und Nackenbereichs des Sitzinsassen und dient bei geöffnetem Verdeck des Kraftwagens dazu, die bei offener Fahrt entstehenden unerwünschten Zuglufterscheinungen zu vermindern. Hierzu wird vorzugsweise ein über die beiden Teilkanäle 33,34 geführter und durch das Heizelement 28 beheizter Warmluftstrom verwendet, der in Richtung des Kopf-, Schulter und Nackenbereichs des Sitzinsassen gerichtet ist. Allerdings wäre es auch denkbar, einen nicht direkt auf den Kopf-, Schulter und Nackenbereichs des Sitzinsassen gerichteten Luftstrom zu verwenden, der insbesondere zur Kompensation von Luftverwirbelungen dient. Dieser Luftstrom könnte ggf. auch kalt bzw. unbeheizt sein. In dem hier gezeigten Ausführungsbeispiel sind die beiden Luftausströmöffnungen 46 am oberen seitlichen Rand der Rückenlehne 10 angeordnet.

Die Luftversorgungseinrichtung 20 funktioniert dabei folgendermaßen:

Zur Sitzbelüftung der dem Sitzinsassen zugewandten Sitzoberfläche wird das Heizelement 28 nicht aktiviert und die Verteileinrichtung 30 so geschaltet, dass der durch das Gebläse 24 erzeugte Luftstrom lediglich über die beiden unteren Teilkanäle 31,32 zu der Vielzahl von Luftausströmöffnungen 44 in dem Sitzbezug 40 verteilt wird. Die beiden oberen Teilkanäle 33,34 sind dabei über nicht gezeigte Absperrorgane verschlossen.

Die Sitzbeheizung unterscheidet sich von der Sitzbelüftung lediglich in der Zuschaltung des Heizelements 28.

Zur Verminderung der unerwünschten Zuglufterscheinungen beim offenen Fahren wird das Heizelement 28 vorzugsweise aktiviert und die Verteileinrichtung 30 so geschaltet, dass der durch das Gebläse 24 erzeugte Luftstrom über die beiden oberen Teilkanäle 33,34 zu den Luftausströmöffnungen 46 bzw. anschließend zum Kopf-, Schulter und Nackenbereichs des Sitzinsassen gelangt.

Durch entsprechende Schaltung der Absperrorgane können dabei die drei beschriebenen Funktionen, insbesondere die Sitzheizung und die Einrichtung zur Verminderung der Zuglufterscheinungen, miteinander gekoppelt werden.

Fig.4 zeigt in schematischer Perspektivansicht eine rückseitige Lehnenverkleidung 48 und die an dieser befestigte Kanalanordnung 22', die zu einer vormontierbaren Baueinheit zusammengefaßt sind. Dabei unterscheidet sich die gezeigte Kanalanordnung 22' von der in den Figuren 1 bis 3 dargestellten dadurch, dass zur Verminderung der Zuglufterscheinungen lediglich eine Luftausströmöffnungen 46 im oberen Bereich der Rückenlehne 10, und zwar hier in der Kopfstütze vorgesehen ist. Nach der Vormontage der Kanalanordnung 22' an der Lehnenverkleidung 48 kann diese an dem Lehnenrahmen 12 auf in Fig.4 ersichtliche Weise befestigt werden. Gleichfalls wäre es auch denkbar, die Kanalanordnung 22,22' von der Rückseite der Rückenlehne 10 her an dieser zu befestigen und anschließend die Lehnenverkleidung 48 an dem Lehnenrahmen 12 anzuordnen.

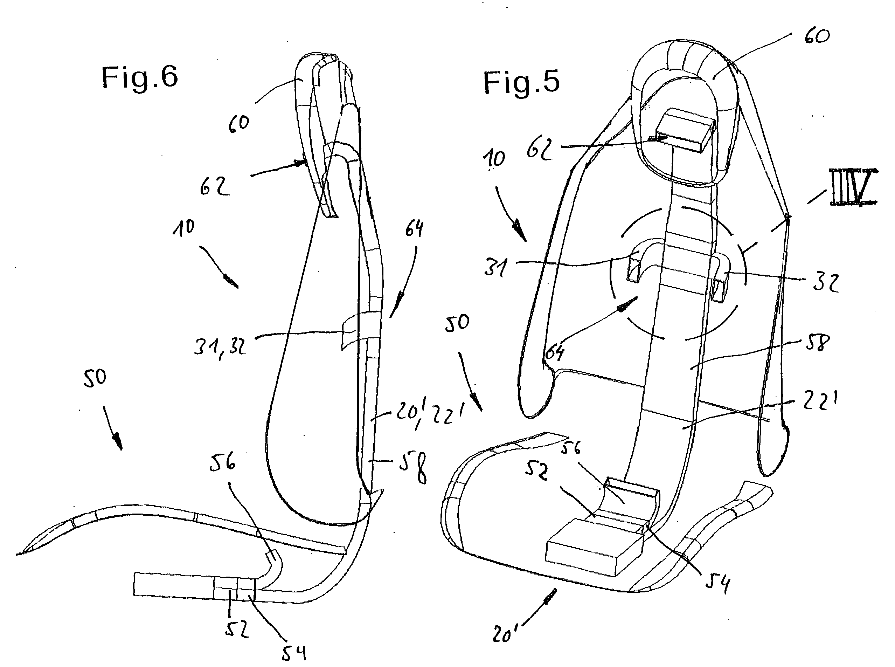

In den Figuren 5 und 6 ist jeweils schematisch eine perspektivische Vorderansicht und eine Seitenansicht auf die Rückenlehne 10 und das Sitzkissenteil 50 gezeigt, wobei die Kanalanordnung 22' der Luftversorgungseinrichtung 20' sowohl in der Rückenlehne 10 als auch im Sitzkissenteil 50 verläuft. Demgemäß sind im Unterschied zu den beiden in den Figuren 1 bis 4 beschriebenen Ausführungsformen auch Luftausströmöffnungen in der dem Sitzinsassen zugewandten Sitzoberfläche des Sitzkissenteils 50 vorgesehen. Druckseitig des hier innerhalb des Sitzkissenteils 50 angeordneten Gebläses 24 wird der Luftstrom durch ein wahlweise zuschaltbares Heizelement 52 geleitet. Mittels einer Verteileinrichtung 54 kann der Luftstrom - je nach Einstellung des Fahrgastes - an einen Teilkanal 56 zur Versorgung der Luftausströmöffnungen des Sitzkissenteils 50 und/oder einen Teilkanal 58 zur Versorgung der Luftausströmöffnungen 44 (Fig.3) in der Rückenlehne 10 und zur Versorgung einer Luftausströmöffnung 62 in der Kopfstütze 60 zur Verminderung von Zuglufterscheinungen verteilt werden. Zur Einstellung der Teilluftströme sind in den Teilkanälen 56,58 Absperrorgane vorgesehen.

Etwa auf halber Höhe der Rückenlehne 10 ist eine weitere, unter Bezugnahme auf Fig.8 noch näher erläuterte Verteileinrichtung 64 vorgesehen, mit der durch den Teilkanal 58 strömende Luft an die beiden Teilkanäle 31 und 32 zur Versorgung der Luftausströmöffnungen in der Rückenlehne 10 abgezweigt, oder über den Teilkanal 58 weiter zur Versorgung der Luftausströmöffnung 62 in der Kopfstütze 60 verteilt werden kann. Die Versorgung der Luftausströmöffnungen 44 in der Rückenlehne 10 erfolgt auf unter Bezugnahme der Figuren 1 bis 3 bereits beschriebene Weise über die Teilkanäle 31,32 und das daran anschließende Abstandsgewirke 36. Die Versorgung der im Sitzbezug des Sitzkissenteils 50 vorgesehenen, hier nicht gezeigten Luftausströmöffnungen erfolgt auf identische Weise wie bei der Rückenlehne 10, also ebenfalls mit einem dem Teilkanal 56 nachgeschalteten Abstandsgewirke, welches die einströmende Luft an die Luftausströmöffnungen in dem perforierten Sitzbezug des Sitzkissenteils 50 gleichmäßig verteilt.

Der Teilkanal 58 endet - wie in Fig.6 erkennbar - mit seiner Luftausströmöffnung 62 etwa flächenbündig integriert in der Vorderseite 68 der Kopfstütze 60, wobei der austretende Luftstrom auf den Kopf- und Nackenbereich des Sitzinsassen gerichtet ist. In Zusammenschau mit Fig.7, die in schematischer, perspektivischer Rückansicht den oberen Bereich der Rückenlehne gemäß Fig.5 darstellt, ist erkennbar, dass der Teilkanal 58 am oberen Ende eine Luftdüse 68 umfaßt, welche teleskopartig höhenverschiebbar innerhalb eines ausgeschnitten dargestellten Kanalabschnitts 70 des Teilkanals 58 angeordnet ist. Dadurch ist die in die hier nicht gezeigte Kopfstütze 60 integrierte Luftdüse 68 und die Luftausströmöffnung 62 derart mit der höhenverstellbaren Kopfstütze 60 bewegungsgekoppelt, dass sich nach dem Anpassen der Kopfstütze 60 an den Sitzinsassen auch die Luftausströmöffnung 62 optimal in Bezug auf die Höhe des Kopf- und Nackenbereichs befindet.

Schließlich ist in Fig.8 vergrößert und schematisch nach dem Detail VIII in Fig.5 die Verteileinrichtung 64 der Kanalanordnung 22 dargestellt, bei welcher die beiden quer zu dem Teilkanal 58 verlaufenden Teilkanäle 31,32 von diesem abgezweigt sind. Dabei ist die Verteileinrichtung 64 der Übersichtlichkeit halber durch ein aufgebrochenes Fenster 76 offen dargestellt. In Strömungsrichtung nach der Abzweigung ist der Teilkanal 58 durch ein Absperrorgan 72 teilweise oder vollständig verschließbar. Im Bereich der Abzweigung bzw. in Strömungsrichtung vor dem Absperrorgan 72 ist den beiden Teilkanälen 31,32 jeweils eine Leiteinrichtung 74 in Form einer Abweisplatte zugeordnet, mit welchen bei zumindest annähernd vollständig geöffnetem Absperrorgan 72 ein Übertritt des Luftstromes aus dem Teilkanal 58 in die beiden Teilkanäle 31,32 vermieden werden kann. Ist das Absperrorgan 72 hingegen vollständig oder teilweise geschlossen, so dass sich im Bereich der Abzweigung ein Staudruck bildet, so passiert der aus dem unteren Bereich des Teilkanals 58 kommende Luftstrom die jeweiligen Leiteinrichtungen 74 und strömt aufgeteilt in die beiden Teilkanäle 31,32. Die Abweisplatten ragen über einem Winkel α von vorzugsweise etwa 40 - 80° gegenüber der Horizontalen in den Teilkanal 58 hinein.

## Patentansprüche

1. Kraftwagensitz für einen offenen Kraftwagen mit einem Sitzkissenteil (50) und einer mit zugehöriger Kopfstütze (60) versehenen Rückenlehne (10), in deren oberen Bereich zur Verminderung unerwünschter Zuglufterscheinungen für den Sitzinsassen wenigstens eine Luftausströmöffnung (46;62) einer Luftversorgungseinrichtung (20;20') angeordnet ist,
**dadurch gekennzeichnet,**
**dass** wenigstens eine weitere Luftausströmöffnung (44) der Luftversorgungseinrichtung (20;20') als Sitzbelüftung und/oder als Sitzheizung in der dem Sitzinsassen zugewandten Sitzoberfläche (40) vorgesehen ist.

2. Kraftwagensitz nach Anspruch 1,
**dadurch gekennzeichnet,**
**dass** die Luftversorgungseinrichtung (20;20') innerhalb des Sitzes angeordnet ist.

3. Kraftwagensitz nach Anspruch 1,
**dadurch gekennzeichnet,**
**dass** wenigstens ein Gebläse (24) der Luftversorgungseinrichtung (20;20') im Sitz integriert ist.

4. Kraftwagensitz nach Anspruch 1,
**dadurch gekennzeichnet,**
**dass** der Luftversorgungseinrichtung (20;20') wenigstens ein Heizelement (28;52) zum Erwärmen der aus der Luftausströmöffnung (46;62) zur Verminderung der Zuglufterscheinungen und aus der Luftausströmöffnung (44) in der Sitzoberfläche (40) austretenden Luftströme zugeordnet ist.

5. Kraftwagensitz nach Anspruch 1,
**dadurch gekennzeichnet,**
**dass** die Luftversorgungseinrichtung (20;20') eine Kanalanordnung (22;22') umfaßt, über welche die Luftausströmöffnung (46;62) zur Verminderung der Zuglufterscheinungen und die Luftausströmöffnung (44) in der Sitzoberfläche (40) versorgt werden.

6. Kraftwagensitz nach Anspruch 5,
**dadurch gekennzeichnet,**
**dass** die Kanalanordnung (22;22') von der Rückseite der Rückenlehne (10) her montierbar ist.

7. Kraftwagensitz nach Anspruch 5,
**dadurch gekennzeichnet,**
**dass** die Kanalanordnung (22;22') eine Verteileinrichtung (64) mit einem ersten Kanal (58) sowie wenigstens einem von diesem abgezweigten und quer zu diesem verlaufenden zweiten Kanal (31,32) aufweist, wobei der erste Kanal (58) in Luftströmungsrichtung nach der Abzweigung durch ein Absperrorgan (72) verschließbar ist, und wobei im Bereich der Abzweigung des zweiten Kanals (31,32) eine zugehörige Leiteinrichtung (74) vorgesehen ist, mit der bei zumindest annähernd vollständig geöffnetem Absperrorgan (72) ein Übertritt des Luftstromes aus dem ersten Kanal (58) in den zweiten Kanal (31,32) vermieden wird.

8. Kraftwagensitz nach Anspruch 5,
**dadurch gekennzeichnet,**
**dass** die Kanalanordnung (22;22') und eine rückseitige Lehnenverkleidung (48) des Sitzes als vormontierbare, an dem Lehnenrahmen (12) befestigbare Baueinheit ausgebildet ist.

9. Kraftwagensitz nach Anspruch 1,
**dadurch gekennzeichnet,**
**dass** die Sitzoberfläche aus einem mit einer Vielzahl von Luftausströmöffnungen (44) versehenen Sitzbezug (40) besteht.

10. Kraftwagensitz nach Anspruch 5 und 9,
**dadurch gekennzeichnet,**
**dass** der Luftversorgungseinrichtung (20;20') ein unter dem perforierten Sitzbezug (40) angeordnetes Abstandsgewirke (36) zugeordnet ist, über welches die aus der Kanalanordnung (22;22') ausströmende Luft an die Luftausströmöffnungen (44) in der Sitzoberfläche verteilt wird.

11. Kraftwagensitz nach Anspruch 1,
**dadurch gekennzeichnet,**
**dass** die Luftausströmöffnungen (44) in der dem Sitzinsassen zugewandten Sitzoberfläche (40) der Rückenlehne (10) vorgesehen sind.

12. Kraftwagensitz nach Anspruch 11,
**dadurch gekennzeichnet,**
**dass** die Luftausströmöffnungen (44) auch in der dem Sitzinsassen zugewandten Sitzoberfläche (40) des Sitzkissenteils (50) vorgesehen sind.

13. Kraftwagensitz nach Anspruch 1,
**dadurch gekennzeichnet,**
**dass** die Luftausströmöffnung (46;62) zur Verminderung der Zuglufterscheinungen in der Kopfstütze (60) angeordnet ist, wobei der austretende Luftstrom auf den Nackenbereich des Sitzinsassen gerichtet ist.

14. Kraftwagensitz nach Anspruch 1,
**dadurch gekennzeichnet,**
**dass** die Kopfstütze (60) höhenverstellbar an der Rückenlehne (10) angeordnet ist, wobei eine die Luftausströmöffnung (46;62) zur Verminderung der Zuglufterscheinungen aufweisende Luftdüse (68) mit der Höhenverstellung der Kopfstütze (60) bewegungsgekoppelt ist.
